# EUROPÄISCHE PATENTSCHRIFT

(11) **EP 2 765 686 B1**
(45) Veröffentlichungstag und Bekanntmachung des Hinweises auf die Patenterteilung: **28.03.2018**
(21) Anmeldenummer: 13154513.9
(22) Anmeldetag: 08.02.2013
(51) Int. Cl.: H01R 11/07, H02K 15/00, H02K 3/50

(54) **Abgewinkelte Verbindungshülse und elektrische Maschine mit derartiger Verbindungshülse**
Curved connecting sleeve and electrical machine with such a connecting sleeve
Douille de connexion coudée et machine électrique avec une telle douille de connexion

(43) Veröffentlichungstag der Anmeldung: 13.08.2014
(73) Patentinhaber: Siemens Aktiengesellschaft, 80333 München (DE)
(72) Erfinder: Heim, Bruno, 97633 Grosseibstadt (DE)

(56) Entgegenhaltungen:
- DE-U1-202009 015 299
- US-A1- 2003 205 401
- US-A1- 2007 226 999
- US-A1- 2011 308 857

## Beschreibung

Die vorliegende Erfindung betrifft eine Verbindung einer ersten elektrischen Leitung mit einer zweiten elektrischen Leitung über eine Verbindungshülse,
- wobei die Verbindungshülse aus einem elektrisch leitenden Material besteht,
- wobei die Verbindungshülse eine erste Einführöffnung aufweist, in welche die erste elektrische Leitung in einer ersten Einführrichtung eingeführt ist,
- wobei die erste elektrische Leitung mit einer Innenwand der ersten Einführöffnung mechanisch und elektrisch verbunden ist,
- wobei die Verbindungshülse eine zweite Einführöffnung aufweist, in welche die zweite elektrische Leitung in einer zweiten Einführrichtung eingeführt ist,
- wobei die zweite elektrische Leitung mit einer Innenwand der zweiten Einführöffnung mechanisch und elektrisch verbunden ist,
- wobei die erste Einführrichtung und die zweite Einführrichtung sich in einem Schnittpunkt unter Bildung eines Winkels kreuzen,
- wobei die zweite elektrische Leitung von der Innenwand der zweiten Einführöffnung geklemmt ist,
- wobei der Winkel zwischen 60° und 120° liegt.

Die vorliegende Erfindung betrifft weiterhin eine elektrische Maschine,
- wobei die elektrische Maschine einen Stator aufweist, in dem eine aus Wicklungsdrähten gewickelte Statorwicklung angeordnet ist,
- wobei die Wicklungsdrähte in Wicklungsenden enden,
- wobei die Wicklungsenden mit außerhalb des Stators verlaufenden Anschlussleitungen verbunden sind.

Im Stand der Technik wird die Verbindung zweier elektrischer Leiter auf verschiedene Arten hergestellt. Beispielsweise ist eine Hartlotverbindung bekannt. Weiterhin sind (unter anderem) sogenannte Stoßverbinder nach DIN EN 60341 bekannt. Derartige Stoßverbinder sind wie obenstehend erläutert aufgebaut. Bei einem Stoßverbinder sind die Einführrichtungen, in denen die elektrischen Leiter in die Verbindungshülse eingeführt werden, diametral entgegengesetzt gerichtet.

Eine Verbindungshülse der eingangs genannten Art ist beispielsweise aus der US 2011/0 308 857 A1 bekannt. Bei dieser Verbindungshülse werden die Leitungen in der Verbindungshülse durch Crimpen geklemmt.

Aus der US 2007/0 226 999 A1 ist ein Verbindungselement bekannt, mittels dessen ein Kabelschuh und ein Leiter miteinander elektrisch verbunden werden können. Das Verbindungselement ist einstückig ausgebildet. Der Kabelschuh und die Leitung werden unter einem 90°-Winkel in das Verbindungselement eingeführt.

Aus dem DE 20 2009 015 299 U1 ist ein Mehrfach-Kabelverbinder bekannt, der einen H-, T-, X- oder Y-förmig ausgebildeten Verbindungskern aus metallischen Röhrchen aufweist, die jeweils ein Kabelende in einer Klemmeinrichtung aufnehmen.

Aus der US 2003/0 205 401 A1 ist eine Verbindung einer ersten elektrischen Leitung mit einer zweiten elektrischen Leitung über ein Verbindungselement bekannt, wobei das Verbindungselement aus einem elektrisch leitenden Material besteht, eine erste Einführöffnung und eine zweite Einführöffnung aufweist. In die erste Einführöffnung ist die erste elektrische Leitung in einer ersten Einführrichtung eingeführt, in die zweite Einführöffnung die zweite elektrische Leitung in einer zweiten Einführrichtung. Die Einführrichtungen kreuzen sich in einem Schnittpunkt unter Bildung eines Winkels, der bei etwa 90° liegt. Die Leitungen sind mit einer jeweiligen Innenwand der jeweiligen Einführöffnung mechanisch und elektrisch verbunden, insbesondere geklemmt.

Bei elektrischen Maschinen ist im Stator ein Wicklungssystem angeordnet, dessen Wicklungen Wicklungsenden aufweisen. Die Wicklungsenden sind in der Regel im Wicklungskopf des Wicklungssystems angeordnet und verlaufen quer zur Erstreckungsrichtung der Wicklungen des Wicklungssystems, beispielsweise bei einer rotatorischen elektrischen Maschine tangential zur Rotationsachse des Rotors der elektrischen Maschine. Die Wicklungsenden werden im Stand der Technik mit Anschlussleitungen verbunden, welche parallel zur Erstreckungsrichtung der Wicklungen des Wicklungssystems aus dem Wicklungssystem herausgeführt werden, bei einer rotatorischen elektrischen Maschine beispielsweise parallel zur Rotationsachse des Rotors. Die Verbindungsstellen der Wicklungsenden mit den Anschlussleitungen liegen innerhalb des Wicklungskopfes.

Um die Anschlussleitungen parallel zur Erstreckungsrichtung der Wicklungen des Wicklungssystems aus dem Wicklungskopf herausführen zu können, müssen die Anschlussleitungen im Stand der Technik um 90° umgebogen werden. Dies ist aufgrund der beengten Platzverhältnisse im Wicklungskopf oftmals nur umständlich zu realisieren. Erschwerend kommt in diesem Zusammenhang hinzu, dass die Anschlussleitungen oftmals einen größeren Leitungsquerschnitt aufweisen als die Wicklungsdrähte, aus denen die Wicklungen des Wicklungssystems hergestellt sind. Zusätzlich sind weiterhin die Anschlussleitungen mit einer (relativ dicken) Aderisolierung versehen, während die Wicklungsdrähte nur mit einem (relativ dünnen) Isolierlack beschichtet sind.

Die Anschlussleitungen weisen weiterhin oftmals eine nennenswerte Länge auf, beispielsweise 1 m bis 2 m. Die Anschlussleitungen werden im Stand der Technik oftmals zu einem Zeitpunkt mit den Wicklungsenden verbunden, zu dem die Herstellung des Stators noch nicht vollständig abgeschlossen ist. Beispielsweise wird erst nach dem Verbinden der Anschlussleitungen mit den Wicklungsenden ein Gehäuse auf den Stator aufgeschrumpft. Vor dem Aufschrumpfen kann beispielsweise eine Drehbearbeitung des Stators erforderlich sein. Für eine derartige Drehbearbeitung (und auch für andere spanende Bearbeitungsvorgänge) müssen die Anschlussleitungen gesichert werden. Dies ist in fertigungstechnischer Hinsicht von Nachteil.

Die Aufgabe der vorliegenden Erfindung besteht darin, Möglichkeiten zu schaffen, mittels derer eine Verbindung der Anschlussleitungen mit den Wicklungsenden der Wicklungen des Wicklungssystems nachträglich - d.h. nach dem vollständigen Herstellen des Stators - möglich ist.

Die Aufgabe wird durch eine Verbindung mit den Merkmalen des Anspruchs 1 gelöst. Vorteilhafte Ausgestaltungen der erfindungsgemäßen Verbindung sind Gegenstand der abhängigen Ansprüche 2 bis 10.

Erfindungsgemäß wird eine Verbindung der eingangs genannten Art dadurch ausgestaltet,
- dass die erste elektrische Leitung einen kleineren Leitungsquerschnitt aufweist als die zweite elektrische Leitung und die erste Einführöffnung einen kleineren Öffnungsquerschnitt aufweist als die zweite Einführöffnung,
- dass die Verbindungshülse entweder zwischen dem Schnittpunkt und der ersten Einführöffnung einen Verjüngungsbereich aufweist, in dem die Verbindungshülse sich von dem Öffnungsquerschnitt der zweiten Einführöffnung auf den Öffnungsquerschnitt der ersten Einführöffnung verjüngt, oder zwischen dem Schnittpunkt und der zweiten Einführöffnung einen Aufweitungsbereich aufweist, in dem die Verbindungshülse sich von dem Öffnungsquerschnitt der ersten Einführöffnung auf den Öffnungsquerschnitt der zweiten Einführöffnung aufweitet,
- dass die erste elektrische Leitung außerhalb der ersten Einführöffnung mit einem Isolierlack beschichtet und die zweite elektrische Leitung außerhalb der zweiten Einführöffnung von einer Aderisolierung umgeben ist und
- dass die erste elektrische Leitung mit der Innenwand der ersten Einführöffnung verschweißt ist.

Dadurch kann - insbesondere innerhalb des Wicklungskopfes - eine abgewinkelte Verbindung eines jeweiligen Wicklungsendes (= erste elektrische Leitung) und einer Anschlussleitung (= zweite elektrische Leitung) erfolgen. Bei hinreichender Länge der zweiten Einführöffnung kann weiterhin die Verbindung der Anschlussleitung mit der Verbindungshülse außerhalb des Wicklungskopfes vorgenommen werden.

Der Winkel kann insbesondere zwischen 80° und 100° liegen.

Es ist möglich, dass die Verbindungshülse mehrstückig aufgebaut ist. Dies kann beispielsweise dadurch realisiert werden, dass die Verbindungshülse ein erstes Hülsenteil und ein zweites Hülsenteil aufweist, dass das erste Hülsenteil die erste Einführöffnung umfasst, dass das zweite Hülsenteil die zweite Einführöffnung umfasst und dass das erste Hülsenteil und das zweite Hülsenteil im Bereich des Schnittpunktes stoffschlüssig miteinander verbunden sind. Alternativ kann die Verbindungshülse als einstückiges Biegeteil ausgebildet sein.

Die Aufgabe wird weiterhin durch eine elektrische Maschine mit den Merkmalen des Anspruchs 5 gelöst. Vorteilhafte Ausgestaltungen der erfindungsgemäßen elektrischen Maschine sind Gegenstand der abhängigen Ansprüche 6 und 7.

Erfindungsgemäß wird eine elektrische Maschine der eingangs genannten Art dadurch ausgestaltet,
- dass jeweils ein Wicklungsende, eine Verbindungshülse und eine Anschlussleitung eine Verbindung nach einem der obigen Ansprüche bilden und
- dass die Wicklungsenden den ersten und die Anschlussleitungen den zweiten elektrischen Leitungen entsprechen.

Die Statorwicklung weist außerhalb des Stators angeordnete Wicklungsköpfe auf. Vorzugsweise sind die Schnittpunkte der Verbindungshülsen innerhalb der Wicklungsköpfe angeordnet und sind die zweiten Einführöffnungen der Verbindungshülsen von außerhalb des Stators und außerhalb der Wicklungsköpfe zugänglich. Aufgrund dieser Ausgestaltung können insbesondere bereits vor dem Einbringen der Statorwicklung in den Stator oder unmittelbar nach dem Einbringen der Statorwicklung in den Stator die Wicklungsenden der Wicklung mit den Verbindungshülsen verbunden werden. Die vollständige Fertigstellung des Stators - einschließlich spanender Bearbeitungsvorgänge und einschließlich des Aufschrumpfens des Gehäuses - können dadurch ausgeführt werden, wobei dennoch die zweiten Einführöffnungen der Verbindungshülsen weiterhin zugänglich bleiben. Die Anschlussleitungen können daher nach dem vollständigen Herstellen des Stators mit den Verbindungshülsen verbunden werden.

Besonders bevorzugt ist in diesem Zusammenhang, dass die erste Einführöffnung einen kleineren Öffnungsquerschnitt aufweist als die zweite Einführöffnung, dass die Verbindungshülsen zwischen dem Schnittpunkt und der zweiten Einführöffnung einen Aufweitungsbereich aufweisen, in dem die Verbindungshülsen sich von dem kleineren Öffnungsquerschnitt auf den Öffnungsquerschnitt der zweiten Einführöffnung aufweiten, und dass die Aufweitungsbereiche der Verbindungshülsen außerhalb des Stators und außerhalb der Wicklungsköpfe angeordnet sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Verbindungshülse im Schnitt,
- FIG 2: die Verbindungshülse von FIG 1 in einer ersten Einführrichtung gesehen,
- FIG 3: eine Verbindung zweier elektrischer Leitungen über die Verbindungshülse von FIG 1 und 2,
- FIG 4: eine weitere Verbindungshülse im Schnitt,
- FIG 5: die Verbindungshülse von FIG 4 in einer ersten Einführrichtung gesehen,
- FIG 6: eine weitere Verbindungshülse im Schnitt,
- FIG 7: eine weitere Verbindungshülse im Schnitt,
- FIG 8: eine elektrische Maschine im Schnitt,
- FIG 9: eine Frontansicht eines Wicklungskopfes und
- FIG 10: einen Schnitt längst eine Linie X-X durch den Wicklungskopf von FIG 9.

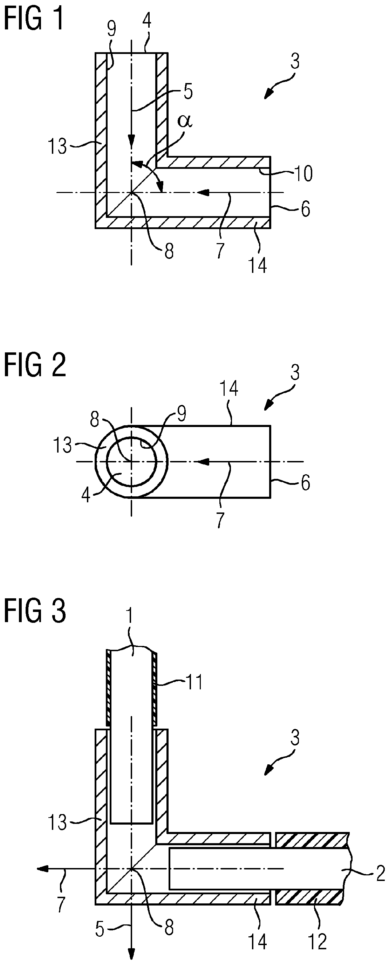

Gemäß den FIG 1 bis 3 weist eine Verbindung einer ersten elektrischen Leitung 1 mit einer zweiten elektrischen Leitung 2 zusätzlich zu den beiden elektrischen Leitungen 1, 2 eine Verbindungshülse 3 auf. Die Verbindungshülse 3 besteht aus einem elektrisch leitenden Material, üblicherweise einem Metall oder einer Metalllegierung. Beispielsweise kann die Verbindungshülse 3 aus Kupfer oder Messing bestehen. Die Verbindungshülse 3 weist eine erste Einführöffnung 4 auf. In die erste Einführöffnung 4 ist die erste elektrische Leitung 1 in einer ersten Einführrichtung 5 eingeführt. Die Verbindungshülse 3 weist weiterhin eine zweite Einführöffnung 6 auf. In die zweite Einführöffnung 6 ist die zweite elektrische Leitung 2 in einer zweiten Einführrichtung 7 eingeführt. Die erste Einführrichtung 5 und die zweite Einführrichtung 7 kreuzen sich in einem Schnittpunkt 8 unter Bildung eines Winkels α. Der Winkel α liegt vorzugsweise zwischen 60° und 120°. Meist liegt er zumeist zwischen 80° und 100°. Besonders bevorzugt liegt der Winkel α bei 90° (rechter Winkel)

Die erste elektrische Leitung 1 ist mit einer Innenwand 9 der ersten Einführöffnung 4 elektrisch und mechanisch verbunden. Insbesondere ist die erste elektrische Leitung 1 mit der Innenwand 9 der ersten Einführöffnung 4 verschweißt, beispielsweise mittels einer elektrischen Widerstandsschweißung. Ebenso ist die zweite elektrische Leitung 2 mit einer Innenwand 10 der zweiten Einführöffnung 6 mechanisch und elektrisch verbunden. Insbesondere ist die zweite elektrische Leitung 2 mit der Innenwand 10 der zweiten Einführöffnung 6 geklemmt, beispielsweise durch Crimpen.

Die erste elektrische Leitung 1 ist außerhalb der ersten Einführöffnung 4 mit einer Isolierung 11 versehen. Die Isolierung 11 ist insbesondere als Isolierlack ausgebildet, mit dem die erste elektrische Leitung 11 beschichtet ist. Im Falle einer elektrischen Widerstandsschweißung muss dadurch der Isolierlack nicht vor dem Durchführen der Schweißung entfernt werden, da der Isolierlack beim Durchführen der Schweißung verdampft. Die zweite elektrische Leitung 2 ist außerhalb der zweiten Einführöffnung 6 ebenfalls mit einer Isolierung 12 versehen. Die Isolierung 12 ist insbesondere als Aderisolierung ausgebildet, welche die zweite elektrische Leitung 2 umgibt.

Gemäß den FIG 1 bis 3 weist die Verbindungshülse 3 ein erstes Hülsenteil 13 und ein zweites Hülsenteil 14 auf. Das erste Hülsenteil 13 umfasst die erste Einführöffnung 4. Das zweite Hülsenteil 14 umfasst die zweite Einführöffnung 6. Das erste Hülsenteil 13 und das zweite Hülsenteil 14 sind im Bereich des Schnittpunktes 8 stoffschlüssig miteinander verbunden. Insbesondere können die beiden Hülsenteile 13, 14 miteinander gelötet oder verschweißt sein.

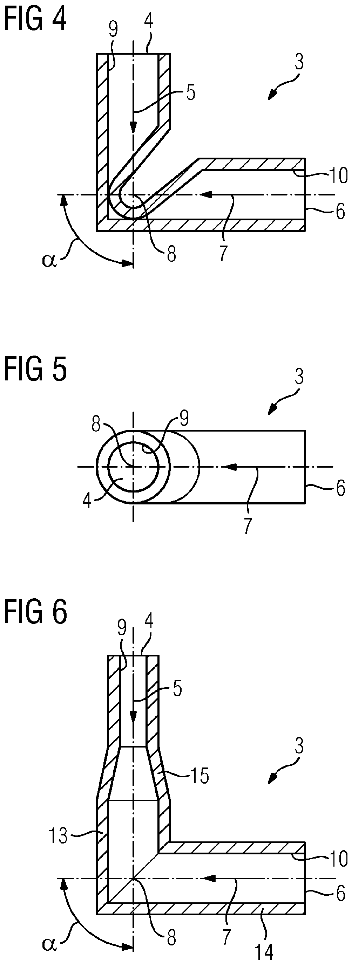

Die FIG 4 und 5 zeigen eine zu den FIG 1 bis 3 alternative Ausgestaltung der Verbindungshülse 3. Der wesentliche Unterschied der FIG 4 und 5 zu den FIG 1 bis 3 besteht darin, dass bei den FIG 4 und 5 die Verbindungshülse 3 als einstückiges Biegeteil ausgebildet ist. Die übrigen Ausführungen der FIG 1 bis 3 sind in analoger Weise auch für die Ausgestaltung der Verbindungshülse 3 gemäß den FIG 4 und 5 gültig.

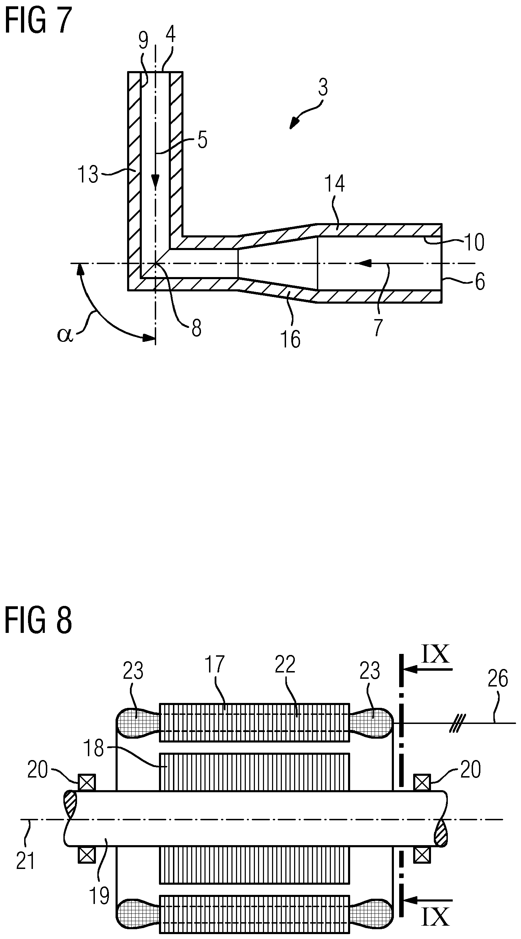

Obenstehend wurden in Verbindung mit den FIG 1 bis 5 zwei Ausgestaltungen der Verbindungshülse 3 erläutert, bei denen die erste elektrische Leitung 1 und die zweite elektrische Leitung 2 gleiche Leitungsquerschnitte aufweisen und hiermit korrespondierend die erste Einführöffnung 4 und die zweite Einführöffnung 6 gleiche Öffnungsquerschnitte aufweisen. Nachfolgend werden in Verbindung mit den FIG 6 und 7 zwei erfindungsgemäße Modifikationen der Verbindungshülse 3 gemäß den FIG 1 bis 3 erläutert, bei denen die Leitungsquerschnitte und die Öffnungsquerschnitte voneinander verschieden sind. Die entsprechenden Ausführungen sind in analoger Weise auch bei der Verbindungshülse 3 gemäß den FIG 4 und 5 realisierbar.

Die Ausgestaltungen der FIG 6 und 7 werden nachfolgend in Verbindung damit erläutert, dass die erste elektrische Leitung 1 einen kleineren Leitungsquerschnitt aufweist als die zweite elektrische Leitung 2 und dementsprechend die erste Einführöffnung 4 einen kleineren Öffnungsquerschnitt aufweist als die zweite Einführöffnung 6.

Da die Einführöffnungen 4, 6 voneinander verschiedene Öffnungsquerschnitte aufweisen, muss die Verbindungshülse 3 einen Bereich 15, 16 aufweisen, in welchem der Übergang von dem kleineren Öffnungsquerschnitt auf den größeren Öffnungsquerschnitt realisiert wird. Der Bereich 15, 16 liegt vorzugsweise nicht im Bereich des Schnittpunkts 8. Es ist daher möglich, dass die Verbindungshülse 3 zwischen dem Schnittpunkt 8 und der ersten Einführöffnung 4 einen Verjüngungsbereich 15 aufweist, in dem die Verbindungshülse 3 sich von dem Öffnungsquerschnitt der zweiten Einführöffnung 6 auf den (kleineren) Öffnungsquerschnitt der ersten Einführöffnung 4 verjüngt. Alternativ ist es möglich, dass die Verbindungshülse 3 zwischen dem Schnittpunkt 8 und der zweiten Einführöffnung 6 einen Aufweitungsbereich 16 aufweist, in dem die Verbindungshülse 3 sich von dem (kleineren) Öffnungsquerschnitt der ersten Einführöffnung 4 auf den Öffnungsquerschnitt der zweiten Einführöffnung 6 aufweitet. Diese letztgenannte Ausgestaltung, also das Vorhandensein des Aufweitungsbereichs 16, ist in der Regel die bessere Lösung.

Die Verbindung der FIG 1 bis 7 kann beispielsweise in vorteilhafter Weise dazu verwendet werden, elektrische Verbindungen bei elektrischen Maschinen herzustellen. Dies wird nachfolgend in Verbindung mit den FIG 8 bis 10 näher erläutert.

Gemäß FIG 8 bis 10 weist eine elektrische Maschine einen Stator 17 auf. Der Stator 17 wirkt mit einem Rotor 18 zusammen, der auf einer Rotorwelle 19 angeordnet ist. Die Rotorwelle 19 ist in Lagern 20 drehbar gelagert, so dass sie um eine Rotationsachse 21 rotieren kann. Im Stator 17 ist eine Statorwicklung 22 angeordnet. Die Statorwicklung 22 ragt mit Wicklungsköpfen 23 axial - d. h. in Richtung der Rotationsachse 21 gesehen - aus dem Stator 17 heraus. Die Wicklungsköpfe 23 sind folglich (axial) außerhalb des Stators 17 angeordnet.

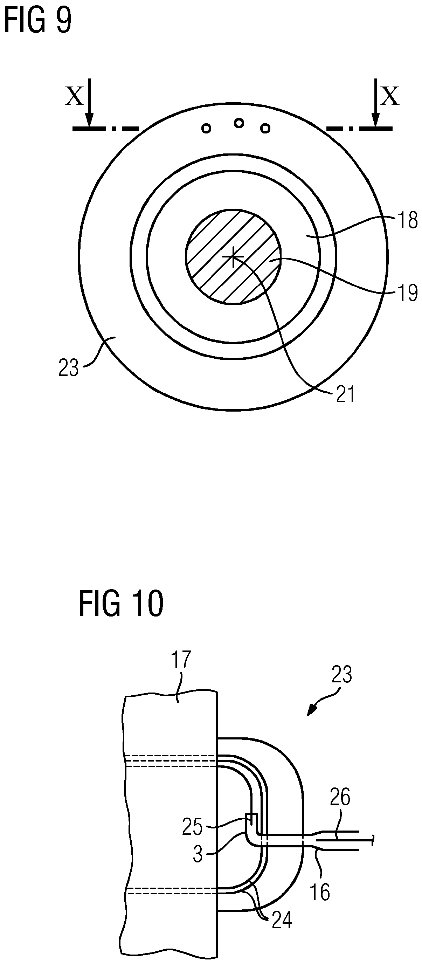

Die Statorwicklung 22 ist gemäß FIG 10 aus Wicklungsdrähten 24 gewickelt, die in Wicklungsenden 25 enden. Aus Gründen der Übersichtlichkeit sind in FIG 10 nur einige wenige Wicklungsdrähte 24 und nur ein einziges Wicklungsende 25 dargestellt. Die Wicklungsenden 25 sind gemäß den FIG 8 und 10 mit Anschlussleitungen 26 verbunden, die außerhalb des Stators 17 (und auch außerhalb der Statorwicklung 22 und der Wicklungsköpfe 23) verlaufen. Die Verbindung der Wicklungsenden 25 und der Anschlussleitungen 26 erfolgt so, wie dies obenstehend in Verbindung mit den FIG 1 bis 7 erläutert wurde. Jeweils ein Wicklungsende 25, eine Anschlussleitung 26 und eine Verbindungshülse 3 (so wie oben beschrieben) bilden somit eine erfindungsgemäße Verbindung. Die Wicklungsenden 25 entsprechen in diesem Rahmen jeweils einer ersten elektrischen Leitung 1, die Anschlussleitungen 26 jeweils einer zweiten elektrischen Leitung 2.

Gemäß FIG 10 sind die ersten Einführöffnungen 4 und auch die Schnittpunkte 8 der Verbindungshülsen 3 innerhalb der Wicklungsköpfe 23 angeordnet. Die ersten Einführöffnungen 4 sind daher nach dem Einfügen der Statorwicklung 22 in den Stator 17 nicht mehr zugänglich. Das elektrische und mechanische Verbinden der Wicklungsenden 25 mit den Verbindungshülsen 3 muss daher in zeitlichem Zusammenhang mit dem Einfügen der Statorwicklung 22 in den Stator 17 erfolgen. Die zweiten Einführöffnungen 6 der Verbindungshülsen 3 hingegen sind von außerhalb des Stators 17 und von außerhalb der Wicklungsköpfe 23 zugänglich.

In aller Regel weisen die Anschlussleitungen 26 mindestens den gleichen Leitungsquerschnitt auf wie die Wicklungsdrähte 24 (und damit auch die Wicklungsenden 25). Oftmals ist der Leitungsquerschnitt der Anschlussleitungen 26 sogar größer als der Leitungsquerschnitt der Wicklungsdrähte 24. Die Verbindungshülse 3 ist daher so ausgebildet, wie dies obenstehend in Verbindung mit den FIG 6 und 7 erläutert wurde. Insbesondere können Verbindungshülsen 3 verwendet werden, die gemäß FIG 10 den in FIG 7 dargestellten Aufweitungsbereich 16 aufweisen. In diesem Fall sind vorzugsweise die Aufweitungsbereiche 16 der Verbindungshülsen 3 außerhalb des Stators 17 und außerhalb der Wicklungsköpfe 23 angeordnet.

Die vorliegende Erfindung weist viele Vorteile auf. Insbesondere ist auf einfache und zuverlässige Weise eine abgewinkelte Verbindung zweier elektrischer Leitungen 1, 2 realisierbar. Bei Verwendung der erfindungsgemäßen Verbindungen im Rahmen einer elektrischen Maschine ist es möglich, den Stator 17 herzustellen, noch bevor die Anschlussleitungen 26 mit den Wicklungsenden 25 verbunden sind. Die Wicklungsköpfe 23 können weiterhin kompakter gestaltet werden, als dies im Stand der Technik möglich ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verbindung einer ersten elektrischen Leitung (1) mit einer zweiten elektrischen Leitung (2) über eine Verbindungshülse (3),
- wobei die Verbindungshülse (3) aus einem elektrisch leitenden Material besteht,
- wobei die Verbindungshülse (3) eine erste Einführöffnung (4) aufweist, in welche die erste elektrische Leitung (1) in einer ersten Einführrichtung (5) eingeführt ist,
- wobei die erste elektrische Leitung (1) mit einer Innenwand (9) der ersten Einführöffnung (4) mechanisch und elektrisch verbunden ist,
- wobei die Verbindungshülse (3) eine zweite Einführöffnung (6) aufweist, in welche die zweite elektrische Leitung (2) in einer zweiten Einführrichtung (7) eingeführt ist,
- wobei die zweite elektrische Leitung (2) mit einer Innenwand (10) der zweiten Einführöffnung (6) mechanisch und elektrisch verbunden ist,
- wobei die erste Einführrichtung (5) und die zweite Einführrichtung (7) sich in einem Schnittpunkt (8) unter Bildung eines Winkels (α) kreuzen,
- wobei die zweite elektrische Leitung (2) von der Innenwand (10) der zweiten Einführöffnung (6) geklemmt ist,
- wobei der Winkel (α) zwischen 60° und 120° liegt,
**dadurch gekennzeichnet,**
- **dass** die erste elektrische Leitung (1) einen kleineren Leitungsquerschnitt aufweist als die zweite elektrische Leitung (2) und die erste Einführöffnung (4) einen kleineren Öffnungsquerschnitt aufweist als die zweite Einführöffnung (6),
- **dass** die Verbindungshülse (3) entweder zwischen dem Schnittpunkt (8) und der ersten Einführöffnung (4) einen Verjüngungsbereich (15) aufweist, in dem die Verbindungshülse (3) sich von dem Öffnungsquerschnitt der zweiten Einführöffnung (4) auf den Öffnungsquerschnitt der ersten Einführöffnung (4) verjüngt, oder zwischen dem Schnittpunkt (8) und der zweiten Einführöffnung (6) einen Aufweitungsbereich (16) aufweist, in dem die Verbindungshülse (3) sich von dem Öffnungsquerschnitt der ersten Einführöffnung (4) auf den Öffnungsquerschnitt der zweiten Einführöffnung (6) aufweitet,
- **dass** die erste elektrische Leitung (1) außerhalb der ersten Einführöffnung (4) mit einem Isolierlack (11) beschichtet ist und die zweite elektrische Leitung (2) außerhalb der zweiten Einführöffnung (6) von einer Aderisolierung (12) umgeben ist und
- **dass** die erste elektrische Leitung (1) mit der Innenwand (9) der ersten Einführöffnung (4) verschweißt ist.

2. Verbindung nach Anspruch 1, **dadurch gekennzeichnet, dass** der Winkel (α) zwischen 80° und 100° liegt.

3. Verbindung nach Anspruch 1 oder 2, **dadurch gekennzeichnet, dass** die Verbindungshülse (3) ein erstes Hülsenteil (13) und ein zweites Hülsenteil (14) aufweist, dass das erste Hülsenteil (13) die erste Einführöffnung (4) umfasst, dass das zweite Hülsenteil (14) die zweite Einführöffnung (6) umfasst und dass das erste Hülsenteil (13) und das zweite Hülsenteil (16) im Bereich des Schnittpunktes (8) stoffschlüssig miteinander verbunden sind.

4. Verbindung nach Anspruch 1 oder 2, **dadurch gekennzeichnet, dass** die Verbindungshülse (3) als einstückiges Biegeteil ausgebildet ist.

5. Elektrische Maschine,
- wobei die elektrische Maschine einen Stator (17) aufweist, in dem eine aus Wicklungsdrähten (24) gewickelte Statorwicklung (22) angeordnet ist,
- wobei die Wicklungsdrähte (24) in Wicklungsenden (25) enden,
- wobei die Wicklungsenden (25) mit außerhalb des Stators (17) verlaufenden Anschlussleitungen (26) verbunden sind,
**dadurch gekennzeichnet,**
- **dass** jeweils ein Wicklungsende (25), eine Verbindungshülse (3) und eine Anschlussleitung (26) eine Verbindung nach einem der obigen Ansprüche bilden und
- **dass** die Wicklungsenden (25) den ersten und die Anschlussleitungen (26) den zweiten elektrischen Leitungen (2) entsprechen.

6. Elektrische Maschine nach Anspruch 5, **dadurch gekennzeichnet, dass** die Statorwicklung (22) außerhalb des Stators (17) angeordnete Wicklungsköpfe (23) aufweist, dass die Schnittpunkte (8) der Verbindungshülsen (3) innerhalb der Wicklungsköpfe (23) angeordnet sind und dass die zweiten Einführöffnungen (6) der Verbindungshülsen (3) von außerhalb des Stators (22) und außerhalb der Wicklungsköpfe (23) zugänglich sind.

7. Elektrische Maschine nach Anspruch 6, **dadurch gekennzeichnet , dass** die Verbindungshülsen (3) zwischen dem Schnittpunkt (8) und der zweiten Einführöffnung (6) einen Aufweitungsbereich (16) aufweisen, in dem die Verbindungshülsen (3) sich von dem Öffnungsquerschnitt der ersten Einführöffnung (4) auf den Öffnungsquerschnitt der zweiten Einführöffnung (6) aufweiten, und dass die Aufweitungsbereiche (16) der Verbindungshülsen (3) außerhalb des Stators (17) und außerhalb der Wicklungsköpfe (23) angeordnet sind.

## Claims

1. Connection of a first electrical line (1) to a second electrical line (2) by way of a connecting sleeve (3),
- wherein the connecting sleeve (3) consists of an electrically conducting material,
- wherein the connecting sleeve (3) has a first insertion opening (4), into which the first electrical line (1) is inserted in a first insertion direction (5),
- wherein the first electrical line (1) is mechanically and electrically connected to an inner wall (9) of the first insertion opening (4),
- wherein the connecting sleeve (3) has a second insertion opening (6), in which the second electrical line (2) is inserted in a second insertion direction (7),
- wherein the second electrical line (2) is mechanically and electrically connected to an inner wall (10) of the second insertion opening (6),
- wherein the first insertion direction (5) and the second insertion direction (7) intersect at a point of intersection (8) by forming an angle (α),
- wherein the second electrical line (2) is clamped by the inner wall (10) of the second insertion opening (6),
- wherein the angle (α) lies between 60° and 120°, **characterised in that**
- the first electrical line (1) has a smaller line cross-section than the second electrical line (2) and the first insertion opening (4) has a smaller opening cross-section than the second insertion opening (6),
- the connecting sleeve (3) has a tapering region (15) either between the point of intersection (8) and the first insertion opening (4), in which the connecting sleeve (3) tapers from the opening cross-section of the second insertion opening (4) to the opening cross-section of the first insertion opening (4), or between the point of intersection (8) and the second insertion opening (6) has an expansion area (16) in which the connecting sleeve expands from the opening cross-section of the first insertion opening (4) to the opening cross-section of the second insertion opening (6),
- that outside of the first insertion opening (4) the first electrical line (1) is coated with an insulating lacquer (11) and outside of the second insertion opening (6) the second electrical line (2) is surrounded by a wire insulation (12) and
- the first electrical line (1) is welded to the inner wall (9) of the first insertion opening (4).

2. Connection according to claim 1, **characterised in that** the angle (α) lies between 80° and 100°.

3. Connection according to claim 1 or 2, **characterised in that** the connecting sleeve (3) has a first sleeve part (13) and a second sleeve part (14), that the first sleeve part (13) comprises the first insertion opening (4), that the second sleeve part (14) comprises the second insertion opening (6) and that the first sleeve part (13) and the second sleeve part (16) are connected to one another by material engagement in the region of the point of intersection (8).

4. Connection according to claim 1 or 2, **characterised in that** the connecting sleeve (3) is embodied as an integral flexible part.

5. Electrical machine,
- wherein the electrical machine has a stator (17), in which a stator winding (22) wound from winding wires (24) is arranged,
- wherein the winding wires (24) end in winding ends (25),
- wherein the winding ends (25) are connected to connection lines (26) running outside of the stator (17),
**characterised in that**,
- in each case a winding end (25), a connecting sleeve (3) and a connection line (26) form a connection according to one of the above claims and
- the winding ends (25) and the connection lines (26) correspond to the first and the second electrical lines (2) respectively.

6. Electrical machine according to claim 5,
**characterised in that** the stator winding (22) has winding heads (23) arranged outside of the stator (17), that the points of intersection (8) of the connecting sleeves (3) are arranged within the winding heads (23) and that the second insertion openings (6) of the connecting sleeves (3) are accessible from outside of the stator (22) and outside of the winding heads (23).

7. Electrical machine according to claim 6, **characterised in that** between the point of intersection (8) and the second insertion opening (6) the connecting sleeves (3) have an expansion area (16), in which the connecting sleeves (3) expand from the opening cross-section of the first insertion opening (4) to the opening cross-section of the second insertion opening (6), and that the expansion areas (16) of the connecting sleeves (3) are arranged outside of the stator (17) and outside of the winding heads (23).

## Revendications

1. Liaison d'une première ligne (1) électrique à une deuxième ligne (2) électrique par une douille (3) de liaison,
- dans laquelle la douille (3) de liaison est en un matériau conducteur de l'électricité,
- dans laquelle la douille (3) de liaison a une première ouverture (4) d'introduction, dans laquelle la première ligne (1) électrique est introduite dans un premier sens (5) d'introduction,
- dans laquelle la première ligne (1) électrique est reliée mécaniquement et électriquement à une paroi (9) intérieure de la première ouverture (4) d'introduction,
- dans laquelle la douille (3) de liaison a une deuxième ouverture (6) d'introduction, dans laquelle la deuxième ligne (2) électrique est introduite dans un deuxième sens (7) d'introduction,
- dans laquelle la deuxième ligne (2) électrique est reliée mécaniquement et électriquement à une paroi (10) intérieure de la deuxième ouverture (6) d'introduction,
- dans laquelle le premier sens (5) d'introduction et le deuxième sens (7) d'introduction se croisent en un point (8) d'intersection avec formation d'un angle (α),
- dans laquelle la deuxième ligne (2) électrique est serrée par la paroi (10) intérieure de la deuxième ouverture (6) d'introduction,
- dans laquelle l'angle (α) est compris entre 60° et 120, **caractérisée**
- **en ce que** la première ligne (1) électrique a une section transversale plus petite que la deuxième ligne (2) électrique et la première ouverture (4) d'introduction a une section transversale plus petite que la deuxième ouverture (6) d'introduction,
- **en ce que** la douille (3) de liaison a soit, entre le point (8) d'intersection et la première ouverture (4) d'introduction, une partie (15) se rétrécissant, dans laquelle la douille (3) de liaison se rétrécie de la section transversale de la deuxième ouverture (4) d'introduction à la section transversale de la première ouverture (4) d'introduction, soit, entre le point (8) d'intersection et la deuxième ouverture (6) d'introduction, une partie (16) s'élargissant, dans laquelle la douille (3) de liaison s'élargit de la section transversale de la première ouverture (4) d'introduction à la section transversale de la deuxième ouverture (6) d'introduction,
- **en ce que** la première ligne (1) électrique est revêtue d'un vernis (11) isolant à l'extérieur de la première ouverture (4) d'introduction et la deuxième ligne (2) électrique est entourée d'un isolant (12) de brin à l'extérieur de la deuxième ouverture (6) d'introduction et
- **en ce que** la première ligne (1) électrique est soudée à la paroi (9) intérieure de la première ouverture (4) d'introduction.

2. Liaison suivant la revendication 1, **caractérisée en ce que** l'angle (α) est compris entre 80° et 100°.

3. Liaison suivant la revendication 1 ou 2, **caractérisée en ce que** la douille (3) de liaison a une première partie (13) et une deuxième partie (14), **en ce que** la première partie (13) de la douille comprend la première ouverture (4) d'introduction, **en ce que** la deuxième partie (14) de la douille comprend la deuxième ouverture (6) d'introduction et **en ce que** la première partie (13) de la douille et la deuxième partie (16) de la douille sont reliées entre elles à coopération de matière dans la région du point (8) d'intersection.

4. Liaison suivant la revendication 1 ou 2, **caractérisée en ce que** la douille (3) de liaison est constitué sous la forme d'une pièce pliée d'un seul tenant.

5. Machine électrique,
- dans laquelle la machine électrique a un stator (17), dans lequel est disposé un enroulement (22) statorique en fil (24) métallique d'enroulement,
- dans laquelle les fils (24) d'enroulement se terminent en des extrémités (25) d'enroulement,
- dans laquelle les extrémités (25) d'enroulement sont reliées à des lignes (26) de connexion s'étendant à l'extérieur du stator (17),
**caractérisée**
- **en ce que** respectivement une extrémité (25) d'enroulement, une douille (3) de liaison et une ligne (26) de connexion forment une liaison suivant l'une des revendications précédentes et
- **en ce que** les extrémités (25) d'enroulement correspondent aux premières et les lignes (26) de connexion aux deuxièmes lignes (2) électriques.

6. Machine électrique suivant la revendication 5, **caractérisée en ce que** l'enroulement (22) statorique a des têtes (23) d'enroulement disposées à l'extérieur du stator (17), **en ce que** les points (8) d'intersection des douilles (3) de liaison sont disposés à l'intérieur des têtes (23) d'enroulement et **en ce que** les deuxièmes ouvertures (6) d'introduction des douilles (3) de liaison sont accessibles de l'extérieur du stator (22) et de l'extérieur des têtes (23) d'enroulement.

7. Machine électrique suivant la revendication 6, **caractérisée en ce que** les douilles (3) de liaison ont, entre le point (8) d'intersection et la deuxième ouverture (6) d'introduction, une partie (16) d'élargissement, dans laquelle les douilles (3) de liaison s'élargissent de la section transversale de la première ouverture (4) d'introduction à la section transversale de la deuxième ouverture (6) d'introduction et **en ce que** les parties (16) d'élargissement des douilles (3) de liaison sont disposées à l'extérieur du stator (17) et à l'extérieur des têtes (23) d'enroulement.
